# EUROPÄISCHE PATENTANMELDUNG

(11) **EP 0 574 106 A2**
(43) Veröffentlichungstag der Anmeldung: **15.12.1993**
(21) Anmeldenummer: 93250163.8
(22) Anmeldetag: 11.06.1993
(51) Int. Cl.: G11B 23/28

(54) **Sicherung für elektronische Datenträger**

(30) Priorität: 11.06.1992 DE 4219424
(71) Anmelder: Engel, Thomas, W-12349 Berlin (DE)
(72) Erfinder: Engel, Thomas, W-12349 Berlin (DE)
(74) Vertreter: Scholz, Hartmut, Dipl.-Ing. Patentanwalt

(57) **Zusammenfassung**

Vorrichtung zur Sicherung eines in einer Schutzhülle aufzubewahrenden elektronischen Datenträgers, insbesondere einer Videokassette, gegen unbefugte Benutzung. Die Schutzhülle der Videokassette weist Deckflächen auf und der elektronische Datenträger ist mit einer oder mehreren Ausnehmungen versehen, wobei in die Ausnehmungen ein die Benutzung des Datenträgers verhindernder, mit einem Schloß versehener Sicherungsbolzen einsteck- und arretierbar ist. Von den Deckflächen der Schutzhülle ist mindestens eine mit einer Ausstanzung (14) versehen, welche mit der den Sicherungsbolzen (16) aufnehmenden Ausnehmungen (15) in dem Datenträger (11) korrespondiert. Die Schutzhülle (10) ist mittels des durch die Ausstanzung (14) in die mit dieser korrespondierenden Ausnehmung (15) gesteckten und arretierten Sicherungsbolzens (16) mit dem Datenträger (11) verbindbar.

## Beschreibung

Die Erfindung betrifft eine Vorrichtung zur Sicherung eines in einer Schutzhülle aufzubewahrenden elektronischen Datenträgers, insbesondere einer Videokassette, gegen unbefugte Benutzung, die Schutzhülle Deckflächen aufweist, der elektronische Datenträger mit einer oder mehreren Ausnehmungen versehen ist und in die Ausnehmungen ein die Benutzung des Datenträgers verhindernder, mit einem Schloß versehener Sicherungsbolzen einsteck- und arretierbar ist.

Handelsübliche Datenträger, beispielsweise Bild- oder Tonträger wie Videokassetten, Audiokassetten, Compact-Disc oder Computer-Disketten werden üblicherweise in Schutzhüllen eingelegt gelagert oder versandt. Vielfach enthalten derartige elektronische Datenträger Informationen, die nicht jedem zugänglich sein sollen. Aus der DE 38 36 887 A1 ist dazu eine Schließvorrichtung bekannt, mit der eine Videokassette abgeschlossen und damit gegen unbefugte Benutzung gesichert werden kann. Nachteilig ist dabei jedoch, daß eine derartige Schließvorrichtung häufig nicht gleich bemerkt und die abgeschlossene Kassette in ein Wiedergabegerät eingeschoben wird. Da die Schließvorrichtung, wenn auch geringfügig, übersteht, kann es dabei zu Beschädigungen des Wiedergabegerätes kommen.

Aufgabe der hier vorliegenden Erfindung ist es, eine Sicherung gegen unbefugte Benutzung elektronischer Datenträger zu schaffen, mit der eine Beschädigung des Wiedergabegerätes ausgeschlossen werden kann.

Gelöst wird diese Aufgabe dadurch, daß mindestens eine der Deckflächen der Schutzhülle mit einer Ausstanzung versehen ist, die mit der den Sicherungsbolzen aufnehmenden Ausnehmungen in dem Datenträger korrespondiert und die Schutzhülle mittels des durch die Ausstanzung in die mit dieser korrespondierenden Ausnehmung gesteckten und arretierten Sicherungsbolzens mit dem Datenträger verbindbar ist. Durch diese Maßnahmen wird eine Entnahme des Datenträgers aus seiner Schutzhülle verhindert. Da ein Datenträger üblicherweise nicht mit seiner Schutzhülle in ein Wiedergabegerät eingelegt wird, ist eine Beschädigung des Wiedergabegerätes ausgeschlossen. Ohne die Schutzhülle zu zerstören, ist eine Entnahme des elektronischen Datenträgers nicht möglich. Unbefugtes Benutzen des jeweiligen elektronischen Datenträgers kann dadurch von dem Befugten erkannt und gegebenenfalls Gegenmaßnahmen ergriffen werden.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- Figur 1: die schematische Darstellung einer erfindungsgemäßen Sicherung beispielhaft anhand einer Videokassette, in Vorderansicht, geschnitten, die in eine Schutzhülle eingelegt und mit einem abschließbaren Sicherungsbolzen mit dieser verbunden ist;
- Figur 2: die Draufsicht auf einen zu sichernden elektronischen Datenträger, beispielsweise eine Videokassette.

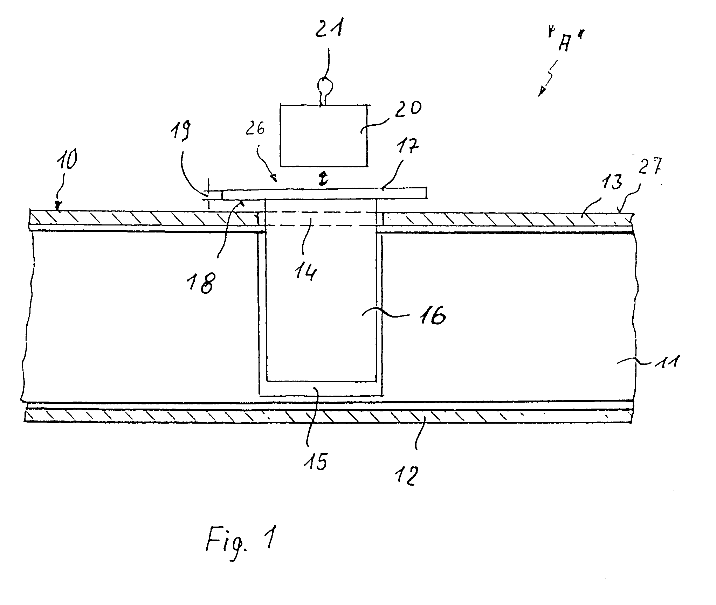

Die in der Figur 1 dargestellte Sicherung "A" besteht im wesentlichen aus einer Schutzhülle 10, in die als elektronischer Datenträger eine Videokassette 11 eingelegt ist. Die Schutzhülle 10 weist eine erste Deckfläche 12 und eine dieser gegenüberliegende zweite Deckfläche 13 auf. Die Schutzhülle kann aus Pappe, Kunststoff, Metall oder einem anderen geeigneten Flachmaterial bestehen.

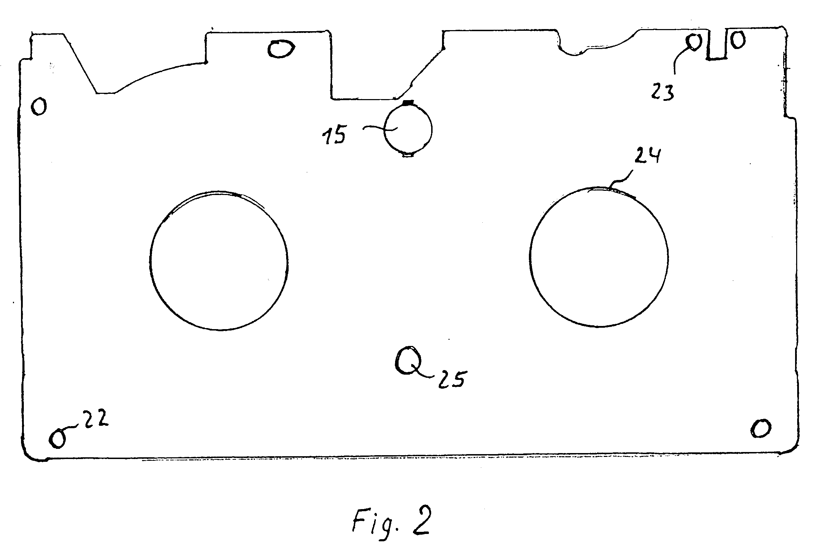

Die in der Figur 2 schematisch in Draufsicht dargestellte Videokassette 11 ist mit einer oder mehreren Ausnehmungen 15 und/oder 25 versehen, die teilweise von der Deckfläche 12 zu der Deckfläche 13 durchgehen. Auch Compact-Discs, Computer-Disketten oder Audio-Kassetten weisen Ausnehmungen auf, die von Deckfläche zu Deckfläche durchgehen und der Führung in dem jeweiligen Wiedergabegerät dienen. Wird der Datenträger 11 nicht benutzt, so sind die Ausnehmungen 15 und 25 ohne Funktion.

Wie die Figur 1 weiter zeigt, weist die zweite Deckfläche 13 eine Ausstanzung 14 auf, durch die ein Sicherungsbolzen 16 gesteckt werden kann. Die Ausstanzung 14 ist dabei so plaziert, daß sie mit einer der Ausnehmungen 15 oder 25 in der Videokassette korrespondiert. Bei dem gezeigten Ausführungsbeispiel korrespondiert die Ausstanzung mit der Ausnehmung 15, wobei der Sicherungsbolzen 16 in diese eingesteckt werden kann.

Da die Schutzhülle 10 aus relativ dünnem und damit flexiblem Material besteht, soll verhindert werden, daß sie aufgebogen und über das freie Ende 26 des Sicherungsbolzens 16 gezogen werden kann. Der Sicherungsbolzen 16 weist dazu an seinem freien Ende 26 einen radial nach außen verlaufenden Sicherungsflansch 17 auf, der mit einem seitlichen Überstand 18 auf der Außenoberfläche 27 der gestanzten Deckfläche 13 zur Anlage bringbar ist. Der Innendurchmesser der Ausstanzung 14 ist somit kleiner als der Außendurchmesser des Sicherungsflansches 18.

Um eine Stapelbarkeit der in den Schutzhüllen 18 aufbewahrten Videokassetten 11 zu erhalten, ist es wünschenswert, wenn die Flanschhöhe 19 des Sicherungsflansches 11 relativ flach ist. Dazu ist es vorgesehen, daß das Verhältnis zwischen dem Außendurchmesser des Sicherungsflansches 17 und Flanschhöhe 19 wie 5:1 bis 15:1 beträgt.

Um zu verhindern, daß der Sicherungsbolzen 16 willkürlich aus der Ausstanzung 14 bzw. der Ausnehmung 15 entfernt wird, ist eine Verriegelung vorgesehen, beispielsweise ein Schloß 20, welches mit einem Schlüssel 21 zu betätigen ist.

Wie die Figur 2 weiter zeigt, ist die Videokassette 11 noch mit Schraubenaufnehmern 22 und Stiftaufnahmen 23 versehen, mit der die meist zweiteilig ausgeführte Videokassette 11 zusammen geführt und gehalten werden kann. Ferner sind Spulenaufnahmen 24 zur Aufnahme des eigentlichen Informationsträgers, beispielsweise eines nicht näher dargestellten Videobandes vorgesehen.

Anstelle einer Videokassette 11 ist es genauso möglich, eine in einem Cover aufbewahrte Compact-Disc oder eine Computer-Diskette, die üblicherweise mit einer zentrischen Bohrung versehen sind, in dem Cover einzuschließen. Ebenso ist es möglich, eine Audiokassette, die üblicherweise mit zwei Spulenlöchern versehen ist, in einer mit einer oder mehreren Ausstanzungen versehenen Schutzhülle 10 mittels eines Sicherungsflansches 16 einzuschließen.

### Bezugszeichen

- A: Sicherung
- 10: Schutzhülle
- 11: Videokassette
- 12: Deckfläche
- 13: Deckfläche
- 14: Ausstanzung
- 15: Ausnehmung
- 16: Sicherungsbolzen
- 17: Sicherungsflansch
- 18: seitlicher Überstand
- 19: Flanschhöhe
- 20: Schloß
- 21: Schlüssel
- 22: Schraubenaufnehmer
- 23: Stiftaufnahmen
- 24: Bandaufnahmen
- 25: Kassettenführung
- 26: freies Ende
- 27: Außenoberfläche

## Patentansprüche

1. Vorrichtung zur Sicherung eines in einer Schutzhülle aufzubewahrenden elektronischen Datenträgers, insbesondere einer Videokassette, gegen unbefugte Benutzung, die Schutzhülle Deckflächen aufweist, der elektronische Datenträger mit einer oder mehreren Ausnehmungen versehen ist und in die Ausnehmungen ein die Benutzung des Datenträgers verhindernder, mit einem Schloß versehener Sicherungsbolzen einsteck- und arretierbar ist, dadurch gekennzeichnet, daß mindestens eine der Deckflächen der Schutzhülle mit einer Ausstanzung (14) versehen ist, die mit der den Sicherungsbolzen (16) aufnehmenden Ausnehmungen (15) in dem Datenträger (11) korrespondiert und die Schutzhülle (10) mittels des durch die Ausstanzung (14) in die mit dieser korrespondierenden Ausnehmung (15) gesteckten und arretierten Sicherungsbolzens (16) mit dem Datenträger (11) verbindbar ist.

2. Vorrichtung nach Anspruch 1, dadurch gekennzeichnet, daß der Sicherungsbolzen (16) an seinem aus der Schutzhülle (10) herausragenden freien Ende (26) mit einem Sicherungsflansch (17) versehen ist und der Außendurchmesser des Sicherungsflansches (17) größer als der Innendurchmesser (28) der Ausstanzung (14) ist.

3. Vorrichtung nach den Ansprüchen 1 und 2, dadurch gekennzeichnet, daß das Verhältnis des Außendurchmessers des Sicherungsflansches (17) zu der Flanschhöhe (19) wie 5:1 bis 15:1 ist.

4. Vorrichtung nach den Ansprüchen 1 bis 3, dadurch gekennzeichnet, daß die Schutzhülle (10) aus Pappe, Kunststoff oder Metall gefertigt ist.
